# EUROPEAN PATENT APPLICATION

(11) **EP 3 825 879 A1**
(43) Date of publication of application: **26.05.2021**
(21) Application number: 19210741.5
(22) Date of filing: 21.11.2019
(51) Int. Cl.: G06F 21/12

(54) **PLAYING DRM PROTECTED CONTENT FROM A PORTABLE FLASH DRIVE**

(71) Applicant: Nagravision S.A., 1033 Cheseaux-sur-Lausanne (CH)
(72) Inventor: Bieber, Yann, 1033 Chesaux-sur-Lausanne (CH)
(74) Representative: Hoyng Rokh Monegier B.V.

(57) **Abstract**

A portable storage device (1) for storing protected content (111, 115, 119) is proposed. The portable storage device comprises connection means (14) for communicatively connecting the portable storage device to a play back device (2, 3, 4) for playing the protected content. The portable storage device further comprises a non-volatile memory (11) for storing the protected content. The protected content is protected by one or more digital rights management schemes (112-114, 116-118, 120-122). The portable storage device further comprises a chipset (10) comprising an embedded digital rights management server (101, 103, 104) configured to provide a digital rights management license to the play back device in response to a request from the play back device for the digital rights management license for playing the protected content.

## Description

### TECHNICAL FIELD

The present disclosure relates to a portable storage device such as a USB flash drive for storing protected content, a play back device for playing protected content that is stored on a portable storage device, and a non-transitionary computer-readable storage medium.

### BACKGROUND ART

The market of DVDs and Blue-ray is shrinking and becoming obsolete due to the transition to streaming movie services, but there remains a desire to purchase movies on a physical storage medium. Movies may be distributed on a physical USB flash drive, such as a USB stick or USB memory card, but there should be a robust copy protection mechanism, which is not available for movies distributed on USB flash drives.

There is a need for a physical storage medium that can replace DVD and Blue-Ray discs and which is capable of having a copy protection for movies stored thereon.

### SUMMARY

According to an aspect of the disclosure a portable storage device is proposed for storing protected content. The portable storage device can comprise connection means for communicatively connecting the portable storage device to a play back device for playing the protected content. Herein, communicatively connecting means either wirelessly connecting or non-wirelessly connecting. When connecting non-wirelessly, the portable storage device is detachably connected to the play back device, e.g. via a USB interface. The portable storage device can further comprise a non-volatile memory for storing the protected content. The protected content can be protected by one or more digital rights management schemes. The portable storage device can further comprise a chipset comprising an embedded digital rights management (DRM) server that is configured to provide a digital rights management license to the play back device in response to a request from the play back device for the digital rights management license for playing the protected content.

Because the DRM server is embedded in the chipset of the portable storage device, the DRM license for play back of the protected content can be obtained by the play back device from the same portable storage device as where the protected content is stored. This allows the content to be protectively stored on the portable storage device, i.e. protected by DRM, and play back of the content to be restricted by the same portable storage device.

The DRM server on the portable storage device may be implemented as a light weight license generating logic that is limited in functionality but can conditionally allow the protected content to be played on a play back device from the portable storage device.

To play back the protected content, the play back device typically only requires to be connected to the portable storage device to obtain both the protected content and the DRM license to play back the protected content. There is no need for a connection to a remote DRM server and no Internet connection is required. This enables the content to be played back when the end used is for example traveling without having access to the Internet, such as when traveling in an airplane.

In an embodiment the digital rights management server on the portable storage device can further be configured to store a device identifier received from the play back device. This device identifier can be stored in a secure memory of the portable storage device. The digital rights management server can be configured to provide the digital rights management license only in response to a request from the play back device having a device identifier matching the stored device identifier.

By storing the device identifier of the play back device on the portable storage device, play back of the protected content can be restricted to the play back device with the legitimate portable storage device. Play back of copied content on another device can be disabled, as the DRM server will not find a matching device identifier of the play back device when comparing the device identifier stored in the protected memory with the actual device identifier of the play back device, either because the device identifiers do not match, or because the protected memory is not present in the other data carrier, or simply because there is no DRM server present in the other data carrier.

In an embodiment the portable storage device can be configured to store the device identifier of only a first play back device requesting the digital rights management license.

This enables the portable storage device to be tied to a single play back device, i.e. the first play back device to which the portable storage device is connected.

In an embodiment the portable storage device can be configured to reset the secure memory each time another portable storage device is communicatively connected to the play back device.

This enables the portable storage device to be used with another play back device to which is connects, and then only with this other play back device.

In an embodiment the portable storage device can be configured to reset the secure memory each time the portable storage device is communicatively reconnected to the play back device.

This enables the portable storage device to store the device identifier each time a new connection is made with a play back device, respectfully of the play back device being the same play back device or another play back device.

In an embodiment the chipset of the portable storage device can further be configured to generate a decryption key for decrypting the protected content. The decryption key can be dynamically generated using a one-way key derivation function and can be based on a secret value stored in a further secure memory of the portable storage device. Preferably the further secure memory is located in a firmware of the portable storage device. It is possible that the further secure memory is part of the chipset. The digital rights management license can comprise the decryption key.

Advantageously, the content may thus be stored in an encrypted form on the portable storage device and the decryption key for decrypting the content may be provided from the portable storage device to the play back device.

In an embodiment the chipset can be further configured to obtain a decryption key for decrypting the protected content from the secure memory or any other secure memory in the portable storage device,or in the chipset. The digital rights management license can comprise the decryption key.

Advantageously, the content may thus be stored in an encrypted form on the portable storage device and the decryption key for decrypting the content may be obtained from the portable storage device to the play back device.

In an embodiment the portable storage device can be a USB flash drive.

In an embodiment the portable storage device can be configured to be powered by the play back device when the portable storage device is communicatively connected to the play back device. This advantageously allows the portable storage device to be battery-less.

In an embodiment the one or more digital rights management schemes are based on at least one of: Apple FairPlay Streaming; Microsoft PlayReady; or NAGRA Persistent Rights Management (PRM) DRM.

In an embodiment the portable storage device can further comprise a wireless communications module for connection to a remote digital rights management server. The embedded digital rights management server can be configured to request at least a part of the digital rights management license from the remote digital rights management server before providing the digital rights management license to the play back device.

Although it is preferred that no remote DRM servers are needed to allow the content from the portable storage device to be played on the play back device, this enables a remote DRM server to be used in case this would be required. Advantageously the portable storage device may include the capabilities for contacting the remote DRM server, allowing the play back device to be without Internet connection.

According to an aspect of the disclosure a non-transitionary computer-readable storage medium is proposed comprising instructions which, when executed by a processor, cause the processor to provide a digital rights management license to a play back device in response to a request from the play back device for the digital rights management license for playing protected content from said storage medium.

In an embodiment the instructions, when executed by the processor, can further cause the processor to store a device identifier received from the play back device in a secure memory part of the storage medium. The processor can be configured to provide the digital rights management license only in response to a request from the play back device having a device identifier matching the stored device identifier.

According to an aspect of the disclosure a play back device is proposed for playing protected content that is stored on a portable storage device having one or more of the above described features. The play back device can be configured to request a digital rights management license from a digital rights management server running in or accessed by the portable storage device. The play back device can further be configured to play the protected content from the portable storage device using the digital rights management license received from the digital rights management server for unprotecting the protected content.

In an embodiment the play back device may comprises only one communication channel, wherein the communication channel is used for data communication with the portable device. Thus, the protected content and the DRM license may be obtained from the portable storage device using a single communication interface, e.g. a USB interface.

The portable storage device may be used for playback of the content stored thereon onto a variety of play back devices. Non limiting examples of play back devices are a tablet, a Windows 10 PC, a Mac, an Android TV set-top box (STB), and a smart TV. Examples of content are movies and/or music items that may be stored onto the portable storage device in the form of one or more DRM protected data files. One or more movies, one or more music items and/or any other protected content may be store on the portable storage device. It is possible that also non-protected content is stored on the portable storage device, i.e. accessible without involving the DRM server. Typically, the content includes data that is to be copy protected and/or that is to be restricted in the number of play back device whereon the content may be played back simultaneously. Preferably, the content may be played back only a single play back device at a time.

The portable storage device may be capable of storing movie content that is at least Full HD, 4K or higher compliant, and making this movie content available to a play back device. The content may be stored on the portable storage device in a compressed and/or encrypted data format.

The content and play back protection are considered strong enough to be approved by major studios. Because of the DRM protection, content stored on the portable storage device cannot be copied and then e.g. shared on the internet for playback an another play back device, as the copy will include the DRM protection preventing it from being played without the portable storage device.

Hereinafter, exemplary embodiments of the disclosure will be described in further detail. It should be appreciated, however, that these embodiments may not be construed as limiting the scope of protection for the present disclosure.

### BRIEF DESCRIPTION OF DRAWINGS

Embodiments will now be described, by way of example only, with reference to the accompanying schematic drawings in which corresponding reference symbols indicate corresponding parts, and in which:

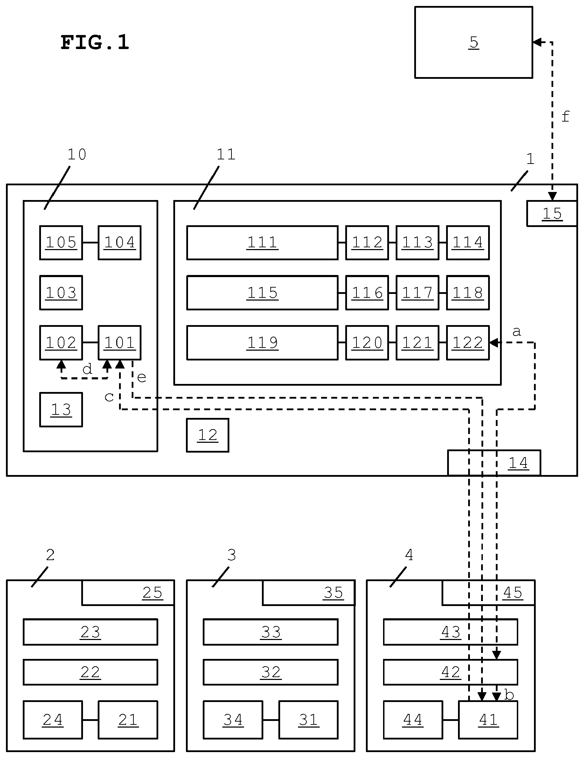

FIGs 1-3 show a portable storage device and a play back devices according to exemplary embodiments of the disclosure. Dashed arrows a-e in FIGs. 1-3 and dashed arrow f in FIG. 1 depict information exchanges between components.

The figures are meant for illustrative purposes only, and do not serve as restriction of the scope or the protection as laid down by the claims.

### DESCRIPTION OF EMBODIMENTS

FIGs. 1-3 show different examples of a portable storage device 1 that is communicatively and detachably connected to a play back device 2, 3, 4. A non-limiting example of a portable storage device 1 is a USB flash drive-based storage device that includes a chipset 10 hosting a DRM server 101, 103, 104. Such USB flash drive may take the form of a USB stick that can be inserted into a USB port of the play back device 2, 3, 4. The portable storage device 1 may include a non-volatile memory 11 for storing one or more data files 111, 115, 119. These data files may be protected by one or more DRM schemes.

The data files 111, 115, 119 may include content that has been encrypted, for example based on a common encryption (CENC) scheme, such as standardized in ISO/IEC 23001-7:2015. The CENC encryption may be based on the advanced encryption standard-cipher block chaining mode (AES-CBC), also known as cipher block chaining sample mode (cbcs). It will be understood that other suitable encryption schemes may be used instead of CENC 'cbcs' encryption.

In the examples of FIGs. 1-3, data file 111 is protected by three DRM schemes 112-114, data file 115 is protected by three DRM schemes 116-118, and data file 119 is protected by DRM schemes 120-122. Having multiple DRM schemes enables different DRM signaling to be applied to the content 111, 115, 119 for playback on different play back devices 2, 3, 4 supporting different DRM schemes. DRM schemes 112, 116 and 120 are for example Nagra™ PRM based, for example for playback of a video content 111, 115, 119 through an Android TV set-top box 3. DRM schemes 113, 117 and 121 are for example Microsoft™ PlayReady based, for example for play back of a video content 111, 115, 119 on a Windows PC 2. DRM schemes 114, 118 and 122 are for example Apple™ Fairplay based, for example for playback of a video content 111, 115, 119 on a Mac computer 4. It will be understood that additionally or alternatively other DRM schemes may be used, that fewer or more DRM schemes may be applied to each data file 111, 115, 119, and that the data files 111, 115, 119 do not have to include the same DRM schemes.

The portable storage device 1 may include a chipset 10 embedding one or more DRM servers 101, 103, 104, typically embedded in a firmware of the chipset. The DRM server 101, 103, 104 may provide the DRM license required to enable play back of the DRM protected content 111, 115, 119 from the portable storage device 1 on a play back device 2, 3, 4. DRM server 101 is for example configured to provide an Apple™ Fairplay based DRM license. DRM server 103 is for example configured to provide a Microsoft™ PlayReady based DRM license. DRM server 104 is for example configured to provide a Nagra™ PRM based DRM license.

The DRM server 101, 104 may include or make use of a one-way key derivation function 102, 105 for dynamically generating a decryption key for decrypting the content 111, 115, 119 before play back on the play back device 2, 3, 5.

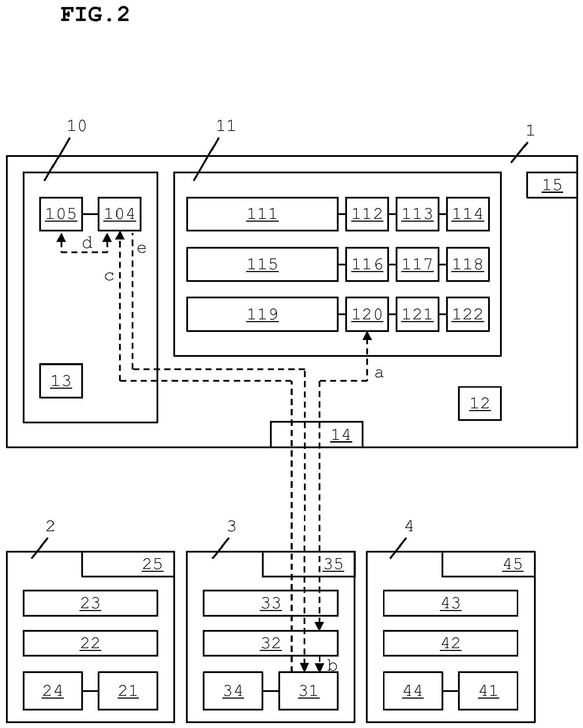

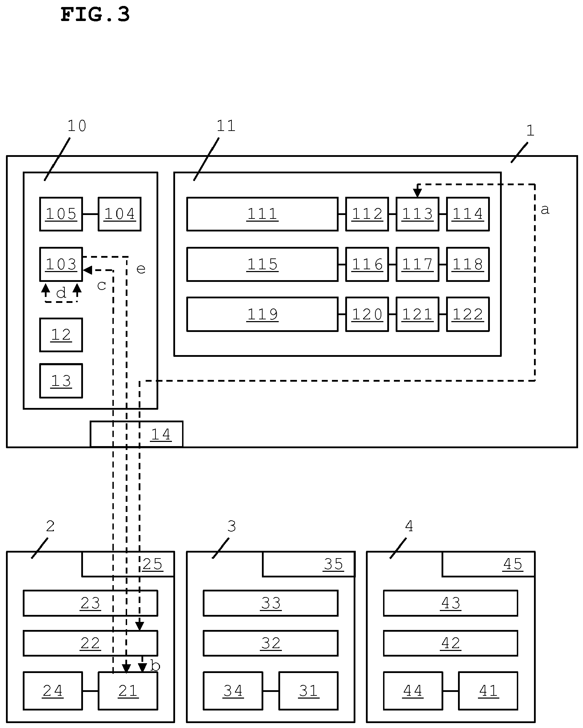

The portable storage device 1 may include a secure memory 12, which is preferably only accessible by the DRM server 101, 103, 104. The secure memory 12 may be part of the chipset 10 such as shown in FIG. 3, or may be located elsewhere in the portable storage device 1, such as shown in FIGs. 1 and 2.

The portable storage device 1 may include a further secure memory 13, which is typically located within the chipset 10 and preferably only accessible by the DRM server 101, 103, 104. The further secure memory 13 and the secure memory 12 may be one and the same and implemented as a single secure memory.

Preferably but optionally, each time the portable storage device 1 is plugged in the play back device 2, 3, 4, the first device (2, 3 or 4) requesting a license from one of the DRM servers 101, 103, 104 will be accepted and its DRM device ID is stored in the secure memory 12. While the portable storage device 1 remains plugged in the play back device, any subsequent license request from the play back device may be accepted and any license request from another device may be refused.

The content key used for the decryption of the content 111, 115, 119 may be dynamically generated using the one-way key derivation function 102, 105 applied on the key ID requested by the license server 101, 104. The content key generation may be based on a secret value stored in the further secret memory 13. The secret value may be used by the one-way key derivation function 102, 105 as a parameter in the calculation of the content key.

The license server 101, 103, 104 and the one-way key derivation function 105, 102 may be part of a firmware, typically stored in the chipset 10, making the DRM server functionality independent from the contents 111, 115, 119.

The portable storage device 1 may be detachably connected to play back device 2, 3, 4 via connection means 14 of the portable storage device 1 and communication channel 25, 35, 45 of the play back device 2, 3, 4.

The play back device 2, 3, 4 may include a player component 22, 32, 42, possibly controlled by an operator app 23, 33, 43, which is used to play content 111, 115, 119 from the portable storage device 1. A DRM client component 21, 31, 41 may be used by the player component 22, 32, 42 to obtain the required DRM license from the portable storage device 1 for playing the content 111, 115, 119.

The player component 22, 32, 42 may be a software application. The software application runs on the device 2, 3, 4 which may be in communication with a display device (not shown). The software application 22, 32, 42 is for example a media player application. Media content, such as an encoded video, is received by the software application 22, 32, 42 from the portable storage device 1. The player component 22, 32, 42 typically receives the content 111, 115, 119 from the portable storage device 1 in an encrypted and compressed video format. Provided the DRM component 21, 31, 41 confirms possession of the required rights to view the media content, a descrambler component (not shown) may transform the encrypted compressed media content 111, 115, 119 into an unscrambled, clear format for decoding. The compressed (or encoded) video data may be uncompressed or decoded by a decoder (not shown). The decoded video data may be played by the player component 22, 32, 42, for example through a renderer (not shown) for display on the display device.

To protect data from being snooped, a hardware secure media path 24, 34, 44 may be used within the device 2, 3, 4 for communicating the DRM related data and/or content after being deprotected within the device 2, 3, 4. The secure media path ensures that the unencrypted media is never exposed to the software application or to any other part of the play back device 2, 3, 4 before it is displayed. For example, only a secure displaying function may have access to the decrypted content for displaying the content on a display device, while other apps or even the OS on the device cannot read the unencrypted media.

In the example of FIG. 1 the portable device 1 is based on a flash drive, which is detachably connected to an Apple™-based play back device 4, e.g. a Mac PC. The connection means 14 may be an Apple™ Lightning connector to be plugged into a Lightning socket 45 of the Mac PC 4.

The Mac PC 4 may include media player software 42, which is used to play e.g. video content 119 from the data storage 11 of the flash drive 1. Fairplay streaming component 41 may be used by the media player software 42 to obtain the required license from the Fairplay streaming license server 101 running on the flash drive 1. The license may include DRM play back restrictions and/or one or more cryptographic keys generated by key generator 102 for decrypting the video 119.

Typically initiated by a user request, the media player 42 may read the video content 119 and the corresponding Fairplay streaming signalling information 122 from the data storage 11, depicted by dashed arrow 'a'. The media player 42 may forward the Fairplay streaming signalling information 122 to the Fairplay streaming component 41, depicted by dashed arrow 'b'. Based on the Fairplay streaming signalling information 122 the Fairplay streaming component 41 may request a license to enable play back of the video content 119 from the Fairplay streaming license server 101, depicted by arrow 'c'. One-way key derivation function 102 may be used by the license server 101 to obtain the decryption key for decrypting the video 119, depicted by dashed arrow 'd'. The one-way derivation function 102 may compute the key from a secret seed stored in memory 13. A device identifier identifying the Mac PC 4 and/or the media player 42 may have been communicated to the license server 101, possibly together with the license request 'c'. This device identifier may be stored in memory 12 and may be used by the license server 101 to determine if the device requesting the license is authorized to play the video 119. A license response may be sent back to the Fairplay streaming component 41, depicted by dashed arrow 'e'. The license typically includes the decryption key for decrypting the video 119, enabling the video to be played by the media player 42.

In FIG. 1 an optional wireless communications module 15 is shown, which may be used for connection to a remote server 5, such as a remote DRM server. The embedded DRM server 101, 103, 104 may be configured to request the DRM license or a part thereof from the remote DRM server 5 before providing the DRM license to the play back device 2, 3, 4.

In the example of FIG. 2 the portable device 1 is based on a USB flash drive, which is detachably connected to an Android-based play back device 3, e.g. an Android TV STB. The connection means 14 may be a USB connector to be plugged into a USB socket 35 of the STB 3.

The STB 3 may include video player software 32, which is used to play e.g. video content 119 from the data storage 11 of the USB drive 1. Nagra Connect client 31 may be used by the video player software 32 to obtain the required Nagra™ PRM based DRM license from the Connect license server 104 running on the USB drive 1. The license may include DRM play back restrictions and/or one or more cryptographic keys generated by key generator 105 for decrypting the video 119.

The video player 32 may read the video content 119 and the corresponding PRM signalling information 120 from the data storage 11, depicted by dashed arrow 'a'. The video player 32 may forward the PRM streaming signalling information 120 to the Connect client 31, depicted by dashed arrow 'b'. Based on the PRM streaming signalling information 120 the Connect client 31 may request a license to enable play back of the video content 119 from the Connect license server 104, depicted by arrow 'c'. One-way key derivation function 105 may be used by the license server 104 to obtain the decryption key for decrypting the video 119, depicted by dashed arrow 'd'. The one-way derivation function 105 may compute the key from a secret seed stored in memory 13. A device identifier identifying the STB 3 and/or the video player 32 may have been communicated to the license server 104, possibly together with the license request 'c'. This device identifier may be stored in memory 12 and may be used by the license server 104 to determine if the device requesting the license is authorized to play the video 119. A license response may be sent back to the Connect client 31, depicted by dashed arrow 'e'. The license typically includes the decryption key for decrypting the video 119, enabling the video to be played by the video player 32.

In the example of FIG. 3 the portable device 2 is based on a USB flash drive, which is detachably connected to a Microsoft-based play back device 2, e.g. a Windows PC. The connection means 14 may be a USB connector to be plugged into a USB socket 25 of the Windows PC 2.

The Windows PC 2 may include media player software 22, which is used to play e.g. video content 111 from the data storage 11 of the USB drive 1. Playready component 21 may be used by the video player software 22 to obtain the required Playready license from the Playready license server 103 running on the USB drive 1. The license may include DRM play back restrictions and/or one or more cryptographic keys for decrypting the video 111.

The video player 22 may read the video content 111 and the corresponding Playready signalling information 113 from the data storage 11, depicted by dashed arrow 'a'. The video player 22 may forward the Playready signalling information 113 to the Playready component 21, depicted by dashed arrow 'b'. Based on the Playready signalling information 113 the Playready component 21 may request a license to enable play back of the video 111 from the license server 103, depicted by arrow 'c'. A one-way key derivation function may be used by the license server 103 to obtain the decryption key for decrypting the video 111, depicted by dashed arrow 'd'. The one-way derivation function may compute the key from a secret seed stored in memory 13. A device identifier identifying the Windows PC 2 and/or the media player 22 may have been communicated to the license server 103, possibly together with the license request 'c'. This device identifier may be stored in memory 12 and may be used by the license server 103 to determine if the device requesting the license is authorized to play the video 111. A license response may be sent back to the Playready component 21, depicted by dashed arrow 'e'. The license typically includes the decryption key for decrypting the video 111, enabling the video to be played by the media player 22.

In the above examples the decryption key is derived using a one-way key derivation function. The present disclosure is not limited hereto and cryptographic keys may be derived or otherwise obtained by the DRM server or license generating logic 101, 103, 104 in any other manner, as long as the cryptographic keys are provided to the play back device 2, 3, 4 from the same portable storage device 1 as where the content 111, 115, 119 is stored.

In the above examples a one-way key derivation function 102, 105 is used to generate the decryption key. Alternatively, the key may be stored in a secure memory of the portable storage device or of the chipset, such as memory 13, and the license server 101 may read the key from this secure memory.

In addition to or instead of a decryption key, the digital rights management license provided by the portable storage device 1 to the play back device 2, 3, 4 may be based on a license restriction definition. The license restriction definition may restrict the play back device 2, 3, 4 in the ability to play the content 111, 115, 119 depending on e.g. capabilities of the play back device 2, 3, 4. For example, the license restriction definition may dictate a minimum security level of Widevine™ Security level 1 for ultra-high-definition (UHD) content but Security level 3 for high-definition (HD) content. Similar restriction definitions exists in e.g. PRM and Playready. The DRM server of the portable storage device 1 may include logic to check the device security level embedded in the license request and compare this with a content minimum security level restriction as defined in the digital rights management scheme 112-114, 116-118, 120-122 before accepting or refusing to generate the license. The license restriction definition may be based on other criteria, e.g. on the existence of an external analog or digital outputs at the play back device.

The present disclosure is not limited to Apple, Nagra or Microsoft based DRM schemes. Any other DRM-like protection scheme may be used to protect the content 111, 115, 119 stored on the portable storage device 1, provided that a corresponding DRM server functionality is implemented on the portable storage device 1 as well.

## Claims

1. A portable storage device (1) for storing protected content (111, 115, 119), the portable storage device comprising connection means (14) for communicatively connecting the portable storage device to a play back device (2, 3, 4) for playing the protected content, **characterized in that** the portable storage device further comprises:
a non-volatile memory (11) for storing the protected content, wherein the protected content is protected by one or more digital rights management schemes (112-114, 116-118, 120-122);
a chipset (10) comprising an embedded digital rights management server (101, 103, 104) configured to provide a digital rights management license to the play back device in response to a request from the play back device for the digital rights management license for playing the protected content.

2. The portable storage device according to claim 1, wherein the digital rights management server is further configured to store a device identifier received from the play back device in a secure memory (12) of the portable storage device, and wherein the digital rights management server is configured to provide the digital rights management license only in response to a request from the play back device having a device identifier matching the stored device identifier.

3. The portable storage device according to claim 2, wherein the portable storage device is configured to store the device identifier of only a first play back device requesting the digital rights management license.

4. The portable storage device according to claim 3, wherein the portable storage device is configured to reset the secure memory each time another portable storage device is communicatively connected to the play back device.

5. The portable storage device according to claim 3 or 4, wherein the portable storage device is configured to reset the secure memory each time the portable storage device is communicatively reconnected to the play back device.

6. The portable storage device according to any one of the claims 1-5, wherein the chipset is further configured to generate a decryption key for decrypting the protected content, wherein the decryption key is dynamically generated using a one-way key derivation function (102, 105) and based on a secret value stored in a further secure memory (13) of the portable storage device, preferably in a firmware of the portable storage device, and wherein the digital rights management license comprises the decryption key.

7. The portable storage device according to any one of the claims 1-5, wherein the chipset is further configured to obtain a decryption key for decrypting the protected content from the secure memory (12, 13), and wherein the digital rights management license comprises the decryption key.

8. The portable storage device according to any one of the preceding claims, wherein the digital rights management license is based on a license restriction definition.

9. The portable storage device according to any one of the preceding claims, wherein the portable storage device is a USB flash drive.

10. The portable storage device according to any one of the preceding claims, wherein the portable storage device is configured to be powered by the play back device when the portable storage device is communicatively connected to the play back device.

11. The portable storage device according to any one of the preceding claims, wherein the one or more digital rights management schemes are based on at least one of: Apple FairPlay Streaming; Microsoft PlayReady; or NAGRA Persistent Rights Management DRM.

12. The portable storage device according to any one of the preceding claims, further comprising a wireless communications module (15) for connection to a remote digital rights management server (5), and wherein the embedded digital rights management server (101, 103, 104) is configured to request at least a part of the digital rights management license from the remote digital rights management server before providing the digital rights management license to the play back device.

13. A non-transitionary computer-readable storage medium comprising instructions which, when executed by a processor, cause the processor to provide a digital rights management license to a play back device in response to a request from the play back device for the digital rights management license for playing protected content from said storage medium.

14. The non-transitionary computer-readable storage medium according to claim 13, wherein the instructions, when executed by the processor, further cause the processor to store a device identifier received from the play back device in a secure memory part of the storage medium, and wherein the processor is configured to provide the digital rights management license only in response to a request from the play back device having a device identifier matching the stored device identifier.

15. A play back device (2, 3, 4) for playing protected content (111, 115, 119) that is stored on a portable storage device (1) according to any one of the claims 1-12, wherein the play back device is configured to: request a digital rights management license from a digital rights management server (101, 103, 104) running in the portable storage device; and play the protected content from the portable storage device using the digital rights management license received from the digital rights management server for unprotecting the protected content.

16. The play back device according to claim 15, wherein the play back device comprises only one communication channel (25, 35, 45), wherein the communication channel is used for data communication with the portable device.
